# FASCICULE DE BREVET EUROPEEN

(11) **EP 4 529 811 B1**
(45) Date de publication et mention de la délivrance du brevet: **18.02.2026**
(21) Numéro de dépôt: 24202747.2
(22) Date de dépôt: 26.09.2024
(51) Int. Cl.: A47J 27/082, A47J 36/16, A47J 36/20, A47J 37/06, F24C 15/00

(54) **APPAREIL DE CUISSON**
KOCHGERÄT
COOKING APPLIANCE

(30) Priorité: 29.09.2023 FR 2310453
(43) Date de publication de la demande: 02.04.2025
(73) Titulaire: SEB S.A., 69130 Ecully (FR)
(72) Inventeur: ALLEMAND, Bernard, 69134 ECULLY CEDEX (FR); DUSSART, Marie, 69134 ECULLY CEDEX (FR); FRADET, Gautier, 69134 ECULLY CEDEX (FR)
(74) Mandataire: SEB Développement

(56) Documents cités:
- WO-A1-2022/011809
- CN-U- 218 738 467

## Description

### Domaine technique de l'invention

La présente invention concerne de manière générale un appareil de cuisson avec une cuve de cuisson à introduire dans un espace de cuisson, et agencé pour permettre la visualisation des aliments en train de cuire dans la cuve de cuisson.

### État de la technique

Il est connu dans l'art antérieur des appareils de cuisson agencés pour permettre la visualisation des aliments tels que les documents CN 218 738 467 U, CN114515112 ou WO202211809. En contrepartie, ces systèmes démontables peuvent conduire à diminuer la durée de vie des surfaces transparentes et des éléments assurant l'étanchéité entre les surfaces transparentes et l'intérieur de la cuve. En effet, l'extraction et la pose des surfaces transparentes sur leur support nécessite de les soumettre à des sollicitations mécaniques régulières (frottements, torsion, flexion, chocs...), ce qui les expose à un plus grand risque de casse et/ou à une détérioration plus rapide.

### Exposé de l'invention

Un but de la présente invention est de répondre aux inconvénients de l'art antérieur mentionnés ci-dessus et en particulier, tout d'abord, de proposer un appareil de cuisson agencé pour permettre la visualisation des aliments tout en garantissant une durée de vie allongée et un maintien dans le temps des qualités initiales de l'appareil.

Pour cela, l'invention concerne un appareil de cuisson selon la revendication 1. La fenêtre transparente et/ou le hublot transparent peut être en verre, en polycarbonate, en matière synthétique transparente (en polymère par exemple), en matière minérale transparente (en verre, en verre borosilicate, en cristal, en quartz...). Le montage à demeure, autrement dit fixe et inamovible du hublot transparent sur la paroi de fermeture permet d'augmenter la durée de vie des moyens d'étanchéité présents entre le hublot transparent et la paroi de fermeture et éventuellement l'intérieur de la cuve de cuisson (par exemple un ou plusieurs joint(s)). De tels joints étant des organes sensibles de l'assemblage ils sont susceptibles d'être sollicités et/ou détériorés lors des montages et démontages successifs d'une fenêtre transparente amovible, sans compter les efforts appliqués aux pièces (torsion, flexion, chocs, chutes...) qui peuvent conduire à une casse. La fixation à demeure du hublot transparent par rapport à la paroi de fermeture permet de protéger le hublot transparent des rayures et/ou des chocs et/ou des fissures. Ces assemblages contribuent également à rendre l'appareil de cuisson simple et pratique à utiliser. Ainsi, un montage à demeure signifie que le hublot est fixe et inamovible. Le hublot ne peut donc pas être démonté par l'utilisateur sans outils spéciaux, le but étant d'empêcher l'utilisateur de démonter ce hublot.

L'appareil de cuisson peut en outre présenter une ou plusieurs des caractéristiques suivantes, prises seules ou en combinaison.

Selon un mode de réalisation, la paroi de fermeture forme une façade de l'appareil de cuisson, détachable de la cuve de cuisson.

Selon un mode de réalisation, l'appareil de cuisson comprend des moyens d'accouplement agencés pour permettre un accouplement réversible entre la paroi de fermeture et la cuve de cuisson. En d'autres termes, la paroi de fermeture et la cuve de cuisson peuvent être séparées, facilitant ainsi leur nettoyage, particulièrement en ce qui concerne la cuve de cuisson qui reçoit les aliments à cuire durant la cuisson et se trouve de fait exposée à la présence de corps gras jusque dans des renfoncements de cuve difficiles d'accès. La cuve de cuisson seule, qui présente une forme plus compacte que lorsqu'elle est fixée à la paroi de fermeture, est plus pratique à installer seule dans un lave-vaisselle et prend moins de place. La paroi de fermeture peut être montée sur le boîtier, même lorsque celle-ci n'est pas fixée à la cuve, assurant un appareil de cuisson compact et adaptable au besoin de l'utilisateur. On peut aussi prévoir une matière spécifique pour le hublot transparent moins résistante et/ou meilleur marché car il n'est pas nécessaire de garantir (pour la paroi de fermeture et/ou pour le hublot transparent) une tenue au lave vaisselle et aux températures de lavage élevées.

Selon un mode de réalisation, si la cuve n'est pas présente dans le boîtier, l'appareil de cuisson ne démarrera pas. En particulier, l'appareil de cuisson comprend une unité de commande et des moyens de détection prévus pour vérifier une présence de la cuve de cuisson, indépendamment de la présence de la paroi de fermeture, de sorte à interdire un démarrage et/ou un fonctionnement de l'appareil de cuisson si la cuve de cuisson est détectée absente ou mal montée.

Selon un mode de réalisation, les moyens d'accouplement comprennent :
- au moins un index de localisation prévu sur l'une de la cuve de cuisson et de la paroi de fermeture et une empreinte de localisation prévue sur l'autre de la cuve de cuisson et de la paroi de fermeture et agencés pour s'accoupler ensemble de manière réversible,
- au moins un index d'attache prévu sur l'une de la cuve de cuisson et de la paroi de fermeture et une contre forme d'attache mobile prévue sur l'autre de la cuve de cuisson et de la paroi de fermeture et agencés pour s'attacher ensemble de manière réversible.
La dissociation des fonctions de guidage / localisation et de fixation assure une bonne tenue du mécanisme d'accouplement. L'index de localisation rend en outre l'accouplement de la façade à la cuve plus facile et intuitif pour l'utilisateur.

Selon un mode de réalisation, lorsque la cuve de cuisson est accouplée à la paroi de fermeture, au moins l'un dudit au moins un index de localisation et dudit au moins un index d'attache est agencé pour contacter simultanément la fenêtre transparente (par exemple au moins un bord de la fenêtre transparente) et le hublot transparent (par exemple au moins un bord du hublot transparent). Ainsi un même organe (l'index de localisation ou l'index d'attache) contacte la fenêtre transparente et le hublot transparent pour garantir un positionnement relatif direct, ce qui procure un alignement précis entre ces pièces démontable entre elles.

Selon un mode de réalisation, les moyens d'accouplement comprennent un cadre supportant :
- ledit au moins un index de localisation, et de préférence deux index de localisation,
- ledit au moins un index d'attache.

Selon un mode de réalisation, le cadre supporte la fenêtre transparente sur la cuve de cuisson. Le cadre est distinct du corps de la cuve de cuisson. Le cadre positionne donc directement la fenêtre transparente et la position relative entre la fenêtre transparente et le hublot transparent est améliorée, et/ou plus précise.

Selon un mode de réalisation, l'appareil de cuisson comprend des moyens de verrouillage agencés pour occuper :
- un état de verrouillage dans lequel la paroi de fermeture est verrouillée sur la cuve de cuisson,
- un état de déverrouillage dans lequel la paroi de fermeture peut être librement détachée de la cuve de cuisson. L'état de verrouillage garantit le maintien de la façade à la cuve. Il est aisé d'accoupler la paroi de fermeture avec la cuve de cuisson pour manipuler cette dernière, et de la libérer pour par exemple placer la cuve de cuisson au lave-vaisselle ou au réfrigérateur, et fermer l'ouverture du boîtier avec la paroi de fermeture seule.

Selon un mode de réalisation, les moyens de verrouillage comprennent une interface de commande de verrouillage agencée à l'extérieur de la paroi externe. Ainsi, l'interface de commande est rapidement accessible.

Selon un mode de réalisation, l'interface de commande de verrouillage comprend une gâchette à actionner par un utilisateur, et les moyens de verrouillage comprennent des moyens de rappel élastique agencés pour rappeler la gâchette dans une position de verrouillage, un verrou mobile agencé pour verrouiller de manière réversible la paroi de fermeture sur la cuve de cuisson et un mécanisme de transmission agencé entre la gâchette et le verrou mobile. Les moyens de rappel élastiques garantissent un maintien stable de la cuve sur la paroi de fermeture, et un moyen de sécurité, de sorte que les moyens de verrouillage soient par défaut dans un état de verrouillage par rapport à la cuve et pour éviter qu'un état de déverrouillage n'intervienne involontairement ou de manière intempestive.

Selon un mode de réalisation, les moyens de verrouillage sont agencés pour verrouiller l'index d'attache avec la contre forme d'attache mobile.

Selon un mode de réalisation, la contre forme d'attache mobile forme un verrou mobile ou un pêne mobile.

Selon un mode de réalisation, l'index d'attache comprend ou forme une forme de réception, et/ou une gâche, et/ou une forme femelle agencée pour recevoir la contre forme d'attache mobile formée par un verrou ou un pêne.

Selon un mode de réalisation, la contre forme d'attache mobile forme le verrou mobile.

Selon un mode de réalisation, l'appareil de cuisson comprend des moyens de préhension de la cuve de cuisson agencés à l'extérieur de la paroi externe lorsque la cuve de cuisson est dans l'espace de cuisson interne. Les moyens de préhension doivent permettre de manipuler la cuve de cuisson, particulièrement durant ou à l'issue d'une cuisson, et sont facilement accessibles.

Selon un mode de réalisation, les moyens de préhension de la cuve de cuisson sont embarqués sur la paroi de fermeture. Ainsi, la cuve de cuisson et la paroi de fermeture étant accouplées et verrouillées ensemble par les moyens de verrouillage, les moyens de préhension permettent de saisir la cuve de cuisson, par l'intermédiaire de la paroi de fermeture, de manière sûre et fiable, particulièrement à l'issue de la cuisson lorsque la cuve et son contenu peuvent présenter des risques de brûlure.

Selon un mode de réalisation, les moyens de préhension sont formés par une poignée attachée à la paroi de fermeture, qui est un moyen ergonomique et intuitif de déplacer la cuve de cuisson.

Selon un mode de réalisation, l'interface de commande de verrouillage est embarquée sur les moyens de préhension de la cuve de cuisson, rendant le fonctionnement des moyens de verrouillage plus rapide et ergonomique. On peut envisager que l'interface de commande de verrouillage, la gâchette, soit agencée sur une extrémité des moyens de préhension, une poignée, de sorte que la gâchette puisse être actionnée par le pouce de l'utilisateur de manière rapide et intuitive lors de la pose et de la dépose de la cuve de cuisson.

La paroi de fermeture est prévue pour former un espace isolant de la chaleur entre la fenêtre transparente et le hublot transparent. Autrement dit, la paroi de fermeture est prévue pour former une lame d'air entre la fenêtre transparente et le hublot transparent. L'air présent entre les deux surfaces transparentes étant particulièrement isolant, ce mode de réalisation permet de maintenir sur la paroi extérieure du boîtier, et particulièrement sur la paroi de fermeture, une température ne présentant pas de risque de brûlure.

Selon un mode de réalisation, l'appareil de cuisson comprend un couvercle de cuve étanche. Le couvercle de cuve est agencé pour s'adapter sur la cuve de cuisson afin de pouvoir y conserver des aliments au réfrigérateur.

Selon un mode de réalisation, la cuve de cuisson présente une forme généralement rectangulaire. De plus la forme simple de la cuve lui permet de s'ajuster facilement sur une étagère et parmi d'autres contenants parallélépipédiques. L'appareil de cuisson est agencé pour interdire un démarrage de la cuisson lorsque le couvercle de cuve est sur la cuve et que la cuve est dans le boîtier. On peut aussi prévoir un obstacle physique qui interdit le montage de la cuve de cuisson encore coiffée de son couvercle.

### Description des figures

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
[fig. 1] représente une vue isométrique d'une cuve de cuisson accouplée à une paroi de fermeture d'un appareil de cuisson ;
[fig. 2] représente une vue isométrique de la cuve de cuisson désaccouplée de la paroi de fermeture de l'appareil de cuisson;
[fig. 3] représente une vue en coupe de l'assemblage entre la paroi de fermeture et la cuve de cuisson de la figure 1, au niveau de moyens de verrouillage se trouvant dans un état verrouillé;
[fig. 4] représente une vue en coupe de la figure 3 avec les moyens de verrouillage dans un état déverrouillé.

### Description détaillée de mode(s) de réalisation

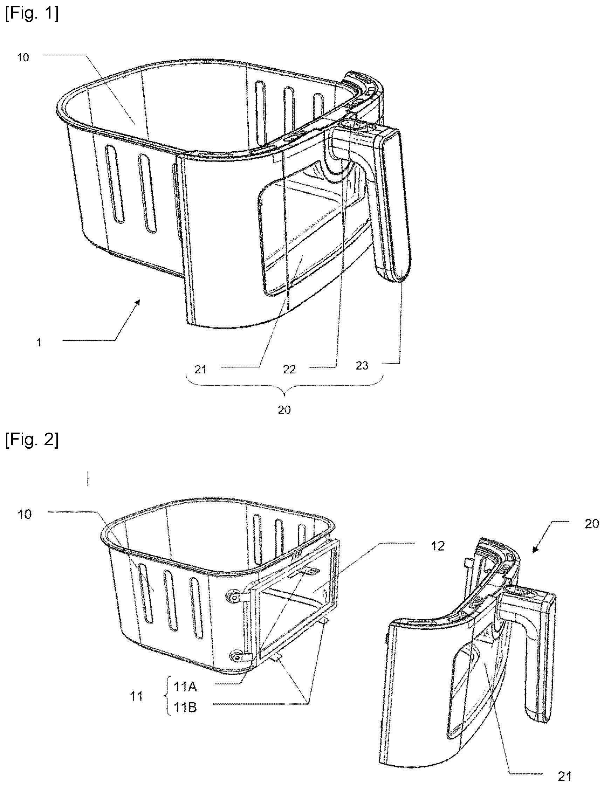

La figure 1 représente un sous-ensemble 1 d'un appareil de cuisson, formé par une cuve de cuisson 10 accouplée à une paroi de fermeture 20, et agencé pour introduire ou retirer des aliments d'un espace de cuisson ménagé dans un appareil de cuisson.

La cuve de cuisson 10 est destinée à recevoir les aliments à cuire et à être introduite dans un espace de cuisson interne d'un boîtier de l'appareil de cuisson (non représentés) par une ouverture ménagée dans le boîtier de l'appareil de cuisson.

La paroi de fermeture 20 comprend des moyens de préhension 23, ici sous la forme d'une poignée, afin de manipuler le sous-ensemble 1, particulièrement la cuve de cuisson 10 qui contient les aliments à cuire et peut présenter une température de paroi assez élevée pour être dangereuse pendant ou peu après la cuisson. La poignée représentée procure donc une interface de manipulation isolée thermiquement.

La paroi de fermeture 20 comprend également une interface de commande de verrouillage, ici sous la forme d'une gâchette 22, qui, lorsqu'elle est actionnée par un utilisateur, est agencée pour déverrouiller et désolidariser la paroi de fermeture 20 de la cuve de cuisson 10. La gâchette 22 est agencée en liaison glissière par rapport aux moyens de préhension 23 et au reste de la paroi de fermeture 20.

Enfin, la paroi de fermeture 20 comprend un hublot transparent 21 permettant de visualiser depuis l'extérieur du boîtier les aliments dans la cuve de cuisson 10 durant leur cuisson.

La figure 2 représente le sous-ensemble de la figure 1 démonté, avec la cuve de cuisson 10 désolidarisée de la paroi de fermeture 20. Afin que la visualisation de l'intérieur de la cuve de cuisson 10 soit possible pendant la cuisson depuis l'extérieur, la cuve 10 comprend une fenêtre transparente 12 prévue pour être située en face ou en regard du hublot transparent 21 de la paroi de fermeture 20.

Deux index de localisation 11B et un index d'attache 11A sont agencés sur un cadre de la fenêtre transparente 12, formant des moyens d'accouplement 11 permettant l'accouplement réversible de la cuve de travail 10 avec la paroi de fermeture 20.

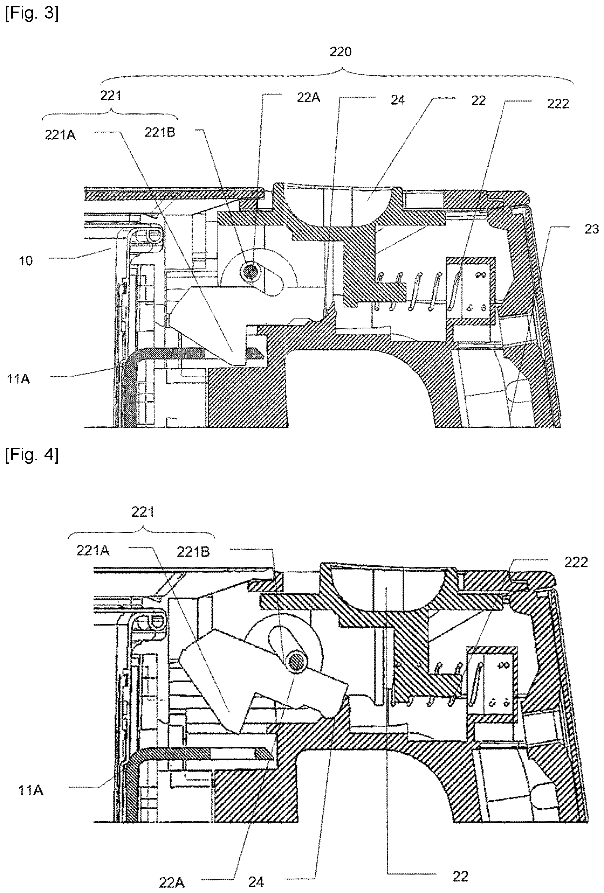

La figure 3 représente une coupe des moyens de préhension 23 de la figure 1, pour montrer un mécanisme d'assemblage/verrouillage de la paroi de fermeture 20 à la cuve de cuisson 10, formant des moyens de verrouillage 220. Les moyens de verrouillage comprennent :
- la gâchette 22, comprenant un axe 22A,
- des moyens de rappel élastiques, tel qu'un ressort 222, agencés dans les moyens de préhension 23, entre la gâchette 22 et une paroi des moyens de préhension 23,
- un verrou mobile 221 présentant un trou oblong incliné recevant l'axe 22A,
- une butée 24, logeant une contreforme circulaire du verrou mobile 24,
- un index d'attache 11A de la cuve de cuisson 10 comprenant un orifice formant une gâche recevant un crochet 221A du verrou mobile 221.

Les moyens de rappel élastiques, tel qu'un ressort 222 maintiennent la gâchette 22 dans une position de verrouillage représentée figure 3, telle que les moyens de verrouillage 220 sont par défaut dans un état de verrouillage en l'absence d'action de commande exercée sur la gâchette 22. Le verrou mobile 221 solidaire de la paroi de fermeture 20 est verrouillé dans l'index d'attache 11A de la cuve de cuisson 10, par le moyen d'une contre forme d'attache ou d'un crochet 221A logé dans la gâche ou l'orifice ménagé dans l'index d'attache 11A.

Le verrou mobile 221 est agencé en liaison glissière avec un axe 22A solidaire de la gâchette 22 : l'axe 22A peut se déplacer dans le trou oblong 221B du verrou mobile 221, allongé selon une direction d'allongement inclinée par rapport à la direction de déplacement imposée par des mouvements de la gâchette 22. En outre, le verrou 221 comprend une contreforme arrondie en appui sur une butée 24.

En conséquence, tel qu'illustré sur la figure 4, lorsque la gâchette 22 est actionnée, donc tirée vers la droite de la figure 4, elle comprime le ressort 222. Sa translation rectiligne entraîne l'axe 22A dans la même direction, de sorte que le verrou 221, en butée sur la butée 24, bascule comme représenté figure 4. Les formes arrondies et complémentaires de la butée 24 et de du verrou mobile 221 facilitent le pivotement du verrou autour de la butée 24 ; le trou oblong 221B et l'axe 22A présentent un mouvement relatif de coulissement ; le crochet 221A n'est plus engagé avec l'index d'attache 11A et la cuve de cuisson 10 peut être séparée de la paroi de fermeture 20.

### Application industrielle

Un appareil de cuisson selon la présente invention, et sa fabrication, sont susceptibles d'application industrielle.

On comprendra que diverses modifications et/ou améliorations évidentes pour l'homme du métier peuvent être apportées aux différents modes de réalisation de l'invention décrits dans la présente description sans sortir du cadre de l'invention tel qu'il est défini dans les revendications. En particulier, on peut noter que la gâchette 22 peut être actionnée selon d'autres mouvements qu'une translation provoquée par une traction de l'utilisateur. On peut prévoir une compression, un basculement, un pivotement. La position de la gâchette 22 peut varier, par exemple en étant placée sous la poignée ou encore sur le côté, de sorte à pouvoir être manipulée facilement par d'autres doigts que le pouce de l'utilisateur lors d'une préhension de la poignée.

## Revendications

1. Appareil de cuisson comprenant au moins :
- un boîtier définissant une paroi externe de l'appareil de cuisson, un espace de cuisson interne et une ouverture vers l'espace de cuisson interne,
- une cuve de cuisson (10), prévue pour recevoir des aliments à cuire et agencée pour être introduite dans l'espace de cuisson interne par l'ouverture du boîtier, et comprenant
- au moins une paroi avec une fenêtre transparente (12) agencée pour venir en regard de l'ouverture du boîtier,
- une paroi de fermeture (20), agencée pour fermer l'ouverture du boîtier lorsque la cuve de cuisson (10) est dans l'espace de cuisson interne, et comprenant au moins un hublot transparent (21) agencé en regard de la fenêtre transparente (12),
- des moyens de cuisson, prévus pour cuire les aliments reçus dans la cuve de cuisson (10), la paroi de fermeture (20) étant prévue détachable par rapport à la cuve de cuisson (10), l'appareil de cuisson étant **caractérisé en ce que** le hublot transparent (21) est monté à demeure sur la paroi de fermeture (20) avec un montage fixe, et **en ce que** des moyens d'étanchéité sont présents entre le hublot transparent (21) et la paroi de fermeture (20).

2. Appareil de cuisson selon la revendication 1, dans lequel la paroi de fermeture (20) forme une façade de l'appareil de cuisson, détachable de la cuve de cuisson (10).

3. Appareil de cuisson selon l'une des revendications 1 à 2, comprenant des moyens d'accouplement (11) agencés pour permettre un accouplement réversible entre la paroi de fermeture (20) et la cuve de cuisson (10).

4. Appareil de cuisson selon la revendication 3, dans lequel les moyens d'accouplement (11) comprennent :
- au moins un index de localisation (11B) prévu sur l'une de la cuve de cuisson (10) et de la paroi de fermeture (20) et une empreinte de localisation prévue sur l'autre de la cuve de cuisson (10) et de la paroi de fermeture (20) et agencés pour s'accoupler ensemble de manière réversible,
- au moins un index d'attache (11A) prévu sur l'une de la cuve de cuisson (10) et de la paroi de fermeture (20) et une contre forme d'attache mobile prévue sur l'autre de la cuve de cuisson (10) et de la paroi de fermeture (20) et agencés pour s'attacher ensemble de manière réversible.

5. Appareil de cuisson selon la revendication 4, dans lequel les moyens d'accouplement (11) comprennent un cadre supportant :
- ledit au moins un index de localisation (11B), et de préférence deux index de localisation (11B),
- ledit au moins un index d'attache (11A).

6. Appareil de cuisson selon la revendication 5, dans lequel le cadre supporte la fenêtre transparente (12) sur la cuve de cuisson (10).

7. Appareil de cuisson selon l'une des revendications 1 à 6, comprenant des moyens de verrouillage (220) agencés pour occuper :
- un état de verrouillage dans lequel la paroi de fermeture (20) est verrouillée sur la cuve de cuisson (10),
- un état de déverrouillage dans lequel la paroi de fermeture (20) peut être librement détachée de la cuve de cuisson (10).

8. Appareil de cuisson selon la revendication 7, dans lequel les moyens de verrouillage (220) comprennent une interface de commande de verrouillage agencée à l'extérieur de la paroi externe.

9. Appareil de cuisson selon la revendication 8, dans lequel l'interface de commande de verrouillage comprend une gâchette (22) à actionner par un utilisateur, et dans lequel les moyens de verrouillage (220) comprennent des moyens de rappel élastique agencés pour rappeler la gâchette (22) dans une position de verrouillage, un verrou (221) mobile agencé pour verrouiller de manière réversible la paroi de fermeture (20) sur la cuve de cuisson (10) et un mécanisme de transmission agencé entre la gâchette (22) et le verrou (221) mobile.

10. Appareil de cuisson selon l'une des revendications 7 à 9 dans leur dépendance à l'une des revendications 4 à 6, dans lequel les moyens de verrouillage (220) sont agencés pour verrouiller l'index d'attache (11A) avec la contre forme d'attache mobile.

11. Appareil de cuisson selon la revendication 10 dans sa dépendance à la revendication 9, dans lequel la contre forme d'attache mobile forme le verrou (221) mobile.

12. Appareil de cuisson selon l'une des revendications 1 à 11, comprenant des moyens de préhension (23) de la cuve de cuisson (10) agencés à l'extérieur de la paroi externe lorsque la cuve de cuisson (10) est dans l'espace de cuisson interne.

13. Appareil de cuisson selon la revendication 12, dans lequel les moyens de préhension (23) de la cuve de cuisson (10) sont embarqués sur la paroi de fermeture (20).

14. Appareil de cuisson selon l'une des revendications 12 ou 13, dans lequel les moyens de préhension (23) sont formés par une poignée (23) attachée à la paroi de fermeture (20).

15. Appareil de cuisson selon l'une des revendications 12 à 14 dans leur dépendance à l'une des revendications 7 à 11, dans lequel l'interface de commande de verrouillage est embarquée sur les moyens de préhension (23) de la cuve de cuisson (10).

16. Appareil de cuisson selon l'une des revendications 1 à 15, dans lequel la paroi de fermeture (20) est prévue pour former un espace isolant de la chaleur entre la fenêtre transparente (12) et le hublot transparent (21).

## Patentansprüche

1. Kochvorrichtung umfassend mindestens:
• ein Gehäuse, das eine Außenwand der Kochvorrichtung, einen inneren Kochraum und eine Öffnung zum inneren Kochraum definiert,
• einen Kochbehälter (10), vorgesehen zum Einfüllen von Lebensmitteln zum Kochen und ausgelegt, um durch die Öffnung des Gehäuses in den inneren Kochraum eingeführt zu werden, und umfassend
- mindestens eine Wand mit einem transparenten Fenster (12), das so angeordnet ist, dass es der Öffnung des Gehäuses gegenüberliegt,
- eine Verschlusswand (20), die so angeordnet ist, dass sie die Öffnung des Gehäuses schließt, wenn der Kochbehälter (10) sich im inneren Kochraum befindet, und mindestens ein transparentes Bullauge (21) umfasst, das dem transparenten Fenster (12) gegenüberliegt,
• Kochmittel, vorgesehen zum Kochen der im Kochbehälter (10) empfangenen Lebensmittel, wobei die Verschlusswand (20) im Verhältnis zum Kochbehälter (10) abnehmbar vorgesehen ist, **dadurch gekennzeichnet, dass** das transparente Bullauge (21) dauerhaft auf der Verschlusswand (20) mit einer festen Montage montiert ist und dass Dichtmittel zwischen dem transparenten Bullauge (21) und der Verschlusswand (20) vorhanden sind.

2. Kochvorrichtung nach Patentanspruch 1, wobei die Verschlusswand (20) eine Fassade der Kochvorrichtung bildet, die vom Kochbehälter (10) abnehmbar ist.

3. Kochvorrichtung nach einem der Patentansprüche 1 bis 2, umfassend Kupplungsmittel (11), die ausgelegt sind, um eine reversible Kopplung zwischen der Verschlusswand (20) und dem Kochbehälter (10) zu ermöglichen.

4. Kochvorrichtung nach Patentanspruch 3, wobei die Kupplungsmittel (11) umfassen:
• mindestens einen Positionsindex (11B), vorgesehen auf einem der Kochbehälter (10) und der Verschlusswand (20) und eine Positionsform, vorgesehen auf dem anderen der Kochbehälter (10) und der Verschlusswand (20), die so angeordnet sind, dass sie reversibel gekoppelt werden,
• mindestens einen Befestigungsindex (11A), vorgesehen auf einem der Kochbehälter (10) und der Verschlusswand (20) und eine bewegliche Befestigungsgegenform, vorgesehen auf dem anderen der Kochbehälter (10) und der Verschlusswand (20), die so angeordnet sind, dass sie reversibel befestigt werden.

5. Kochvorrichtung nach Patentanspruch 4, wobei die Kupplungsmittel (11) einen Rahmen umfassen, der unterstützt:
• den mindestens einen Positionsindex (11B), und vorzugsweise zwei Positionsindizes (11B),
• den mindestens einen Befestigungsindex (11A).

6. Kochvorrichtung nach Patentanspruch 5, wobei der Rahmen das transparente Fenster (12) auf dem Kochbehälter (10) unterstützt.

7. Kochvorrichtung nach einem der Patentansprüche 1 bis 6, umfassend Verriegelungsmittel (220), die so angeordnet sind, dass sie besetzen:
• einen Verriegelungszustand, in dem die Verschlusswand (20) auf dem Kochbehälter (10) verriegelt ist,
• einen Entriegelungszustand, in dem die Verschlusswand (20) frei vom Kochbehälter (10) abnehmbar ist.

8. Kochvorrichtung nach Patentanspruch 7, wobei die Verriegelungsmittel (220) eine Verriegelungssteuerungsschnittstelle umfassen, die außerhalb der Außenwand angeordnet ist.

9. Kochvorrichtung nach Patentanspruch 8, wobei die Verriegelungssteuerungsschnittstelle einen Auslöser (22) umfasst, der von einem Benutzer betätigt werden kann, und wobei die Verriegelungsmittel (220) elastische Rückführmittel umfassen, die so angeordnet sind, dass sie den Auslöser (22) in eine Verriegelungsposition zurückführen, einen beweglichen Riegel (221), der so angeordnet ist, dass er die Verschlusswand (20) am Kochbehälter (10) reversibel verriegelt und einen Übertragungsmechanismus, der zwischen dem Auslöser (22) und dem beweglichen Riegel (221) angeordnet ist.

10. Kochvorrichtung nach einem der Patentansprüche 7 bis 9, in Abhängigkeit von einem der Patentansprüche 4 bis 6, wobei die Verriegelungsmittel (220) so angeordnet sind, dass sie den Befestigungsindex (11A) mit der beweglichen Befestigungsgegenform verriegeln.

11. Kochvorrichtung nach Patentanspruch 10, in Abhängigkeit von Patentanspruch 9, wobei die bewegliche Befestigungsgegenform den beweglichen Riegel (221) bildet.

12. Kochvorrichtung nach einem der Patentansprüche 1 bis 11, umfassend Greifmittel (23) für den Kochbehälter (10), die außerhalb der Außenwand angeordnet sind, wenn sich der Kochbehälter (10) im inneren Kochraum befindet.

13. Kochvorrichtung nach Patentanspruch 12, wobei die Greifmittel (23) für den Kochbehälter (10) auf der Verschlusswand (20) getragen werden.

14. Kochvorrichtung nach einem der Patentansprüche 12 oder 13, wobei die Greifmittel (23) durch einen Griff (23) gebildet werden, der an der Verschlusswand (20) befestigt ist.

15. Kochvorrichtung nach einem der Patentansprüche 12 bis 14, in Abhängigkeit von einem der Patentansprüche 7 bis 11, wobei die Verriegelungssteuerungsschnittstelle auf den Greifmitteln (23) für den Kochbehälter (10) getragen wird.

16. Kochvorrichtung nach einem der Patentansprüche 1 bis 15, wobei die Verschlusswand (20) vorgesehen ist, um einen wärmeisolierenden Raum zwischen dem transparenten Fenster (12) und dem transparenten Bullauge (21) zu bilden.

## Claims

1. Cooking appliance comprising at least:
• a casing defining an external wall of the cooking appliance, an internal cooking space, and an opening towards the internal cooking space,
• a cooking bowl (10), designed to receive food to be cooked and arranged to be introduced into the internal cooking space through the opening of the casing, and comprising
- at least one wall with a transparent window (12) arranged to face the opening of the casing,
- a closure wall (20), arranged to close the opening of the casing when the cooking bowl (10) is within the internal cooking space, and comprising at least one transparent porthole (21) arranged to face the transparent window (12),
• cooking means, provided to cook the food received in the cooking bowl (10), the closure wall (20) being detachably mounted in relation to the cooking bowl (10), **characterized in that** the transparent porthole (21) is permanently mounted on the closure wall (20) with a fixed assembly, and **in that** sealing means are present between the transparent porthole (21) and the closure wall (20).

2. Cooking appliance according to claim 1, wherein the closure wall (20) forms a facade of the cooking appliance, detachable from the cooking bowl (10).

3. Cooking appliance according to one of claims 1 to 2, comprising coupling means (11) arranged to allow reversible coupling between the closure wall (20) and the cooking bowl (10).

4. Cooking appliance according to claim 3, wherein the coupling means (11) comprise:
• at least one locating index (11B) provided on one of the cooking bowl (10) and the closure wall (20) and a locating impression provided on the other of the cooking bowl (10) and closure wall (20) arranged to couple together reversibly,
• at least one attachment index (11A) provided on one of the cooking bowl (10) and the closure wall (20) and a movable attachment counterpart provided on the other of the cooking bowl (10) and the closure wall (20) arranged to attach together reversibly.

5. Cooking appliance according to claim 4, wherein the coupling means (11) comprise a frame supporting:
• said at least one locating index (11B), and preferably two locating indexes (11B),
• said at least one attachment index (11A).

6. Cooking appliance according to claim 5, wherein the frame supports the transparent window (12) on the cooking bowl (10).

7. Cooking appliance according to one of claims 1 to 6, comprising locking means (220) arranged to occupy:
• a locking state in which the closure wall (20) is locked onto the cooking bowl (10),
• an unlocking state in which the closure wall (20) can be freely detached from the cooking bowl (10).

8. Cooking appliance according to claim 7, wherein the locking means (220) comprises a locking control interface arranged outside the external wall.

9. Cooking appliance according to claim 8, wherein the locking control interface comprises a trigger (22) to be activated by a user, and wherein the locking means (220) comprises elastic return means arranged to return the trigger (22) to a locking position, a movable lock (221) arranged to lock the closure wall (20) onto the cooking bowl (10) reversibly and a transmission mechanism arranged between the trigger (22) and the movable lock (221).

10. Cooking appliance according to one of claims 7 to 9, in dependency on one of claims 4 to 6, wherein the locking means (220) are arranged to lock the attachment index (11A)with the movable attachment counterpart.

11. Cooking appliance according to claim 10, in dependency on claim 9, wherein the movable attachment counterpart forms the movable lock (221).

12. Cooking appliance according to one of claims 1 to 11, comprising gripping means (23) for the cooking bowl (10) arranged outside the external wall when the cooking bowl (10) is in the internal cooking space.

13. Cooking appliance according to claim 12, wherein the gripping means (23) for the cooking bowl (10) are carried on the closure wall (20).

14. Cooking appliance according to one of claims 12 or 13, wherein the gripping means (23) are formed by a handle (23) attached to the closure wall (20).

15. Cooking appliance according to one of claims 12 to 14, in dependency on one of claims 7 to 11, wherein the locking control interface is carried on the gripping means (23) for the cooking bowl (10).

16. Cooking appliance according to one of claims 1 to 15, wherein the closure wall (20) is designed to form a heat insulating space between the transparent window (12) and the transparent porthole (21).
